# EUROPEAN PATENT APPLICATION

(11) **EP 2 886 079 A1**
(43) Date of publication of application: **24.06.2015**
(21) Application number: 14172667.9
(22) Date of filing: 17.06.2014
(51) Int. Cl.: A61C 13/00, A61C 8/00, A61C 5/10

(54) **PROCESS FOR PRODUCING SUPERSTRUCTURES FOR DENTAL PROSTHESES BY STRATIFICATION ON PREFORMED ELEMENTS**

(30) Priority: 19.12.2013 IT MI20132131
(71) Applicant: Heraeus Kulzer GmbH, 63450 Hanau (DE)
(72) Inventor: Piasini, Bruno, 23020 Montagna in Valtellina Sondrio (IT); Scotti, Antonio Maria, 20900 Monza e Brianza (IT)
(74) Representative: Martegani, Franco

(57) **Abstract**

A process for producing a superstructure (5) for dental prostheses, obtained with a stratification method, the process comprising the previous creation of a preformed interface (6) and the subsequent construction, by the stratification of a material (11) on the same interface (6), of an anatomical part (2) of said superstructure (5).

With respect to known production methods, the process of the invention offers the advantage of allowing a finished superstructure, i.e. complete with an interface whose geometry has the maximum precision required for an effective coupling with an implant, to be obtained directly in the stratification phase.

## Description

The present invention relates to a stratification process over a shaped interface for producing improved superstructures for prostheses. The invention also relates to the superstructure for dental prostheses produced with this process.

The field of the invention is that of dental prostheses, wherein the superstructure is obtained by means of a stratification process and is anchored to the implant in correspondence with a connection obtained on the respective coupling surfaces. In particular, the above-mentioned connection consists of a shaped interface situated on the portion of superstructure facing the implant. This interface must reproduce as accurately as possible, the form and dimensions of the corresponding interface situated on the portion of implant receiving it. Otherwise, i.e. in the case of inaccuracies, there would in fact be the formation of slits between the superstructure and the implant, with the creation of clearances and harmful bacterial infiltrations.

At present, the interface of superstructures of the type under examination firstly envisages the creation of the superstructure by means of a stratification process and subsequently the preparation of the coupling interface with the implant, directly on the superstructure thus produced. The preparation phase of the interface on the superstructure previously produced represents an additional operation, in that the more accurate the formation of the interface, the longer and more complex this operation will be. For this reason, methods for producing traditional superstructures effected with a stratification process become lengthy and complex due to the necessity of forming an interface having the desired shape directly on the superstructure, with the precision requirements necessary for anchoring it to the implant.

The main objective of the present invention is therefore to offer a process for producing a stratified superstructure which also allows the interface of the same to be obtained in the same production phase as the superstructure, with the precision and accuracy necessary for anchoring it to the implant.

This and other objectives are obtained with the process, superstructure and prosthesis of claims 1, 4 and 6 respectively. Preferred embodiments of the invention are described in the remaining claims.

With respect to known production methods, the method of the invention offers the advantage of allowing a finished superstructure, i.e. complete with an interface whose geometry has the maximum precision required by an effective coupling with the implant, to be obtained directly during the stratification phase.

These and other objectives, advantages and characteristics appear evident from the following description of a preferred embodiment of the superstructure of the invention, illustrated by way of non-limiting example, in the figures of the enclosed drawings in which:
- figure 1 illustrates a sectional view of a superstructure produced with a traditional stratification method and subsequent preparation of the interface;
- figure 2 illustrates a sectional view of a superstructure produced with the process of the invention;
- figures 3 and 4 illustrate a sectional view and view from below, respectively, of the preformed interface of the superstructure of figure 2; and
- figure 5 illustrates a sectional view of the detail of the initial stratification process of the superstructure of figure 2 on the preformed interface of figures 3 and 4.

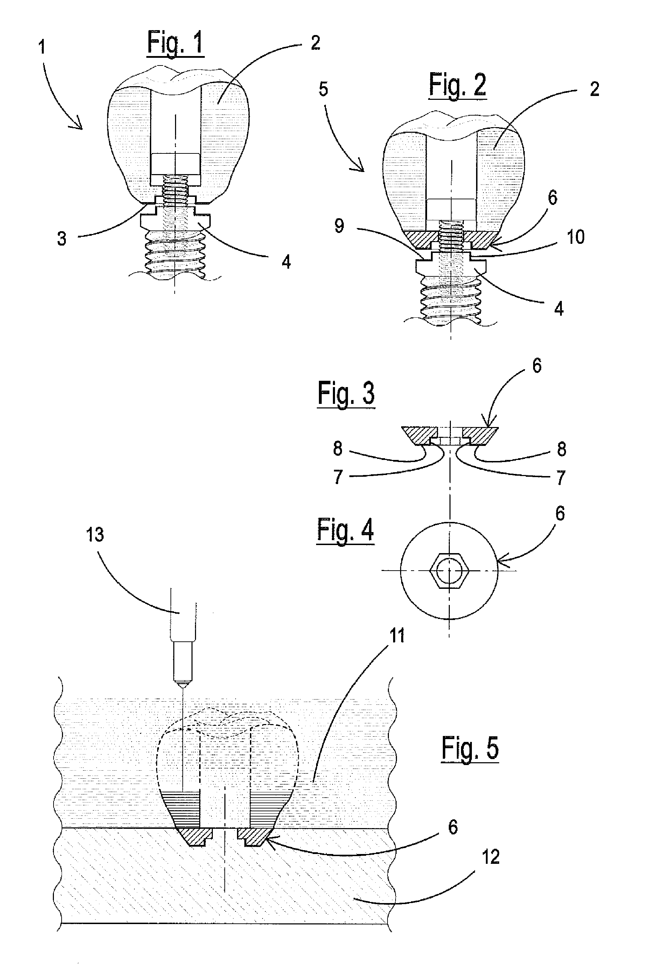

The known superstructure of figure 1 is indicated, as a whole with 1. This is composed of an anatomical part 2 obtained with a stratification process, and an interface 3 situated on the side of the coupling superstructure 1 with the implant 4. In particular, the stratification process used for obtaining the anatomical part 2 of the superstructure 1, is effected by the addition of a material in layers (a powder, for example a cobalt-chromium alloy or a plastic material in the liquid state or other suitable material), subsequently consolidated (for example, by thermal treatment, gluing, etc..) according to the three-dimensional anatomical design of the final superstructure.

The interface 3 of the superstructure 1, on the other hand, is prepared by subtracting material (by milling, for example) from the stratified anatomical portion 2 of the superstructure 1 previously obtained. The preparation of the interface 3, however, is hindered by the encumbrances and by the same irregular profile, which is different each time, of the anatomical part 2 of the superstructure and it therefore becomes difficult and expensive to guarantee the geometrical precision and repeatability of the same, which are required for reaching the necessary conditions for a regular coupling with the implant 4 as this requires special equipment and manual interventions.

In order to overcome these drawbacks, and in accordance with the process of the invention, a new superstructure 5 has been produced, whose anatomical part 2 is constructed by stratification on a preformed interface 6 (figure 2). The materials forming the above-mentioned anatomical part 2 and interface 6 can be the same or different from each other, provided they are reciprocally compatible.

The interface 6 can be produced, for example, by turning a piece of cobalt-chromium alloy or other suitable material. The interface 6 can also be prepared by means of a stratification process and subsequent processing with standard equipment of its coupling sides 7 and 8.

The interface 6 of the superstructure 5 of the invention consists of a separate body, produced before the formation of the anatomical part 2, for example by turning the surfaces 7 and 8 for coupling with the respective surfaces 9 and 10 of the implant. This turning operation is particularly facilitated by the fact that the interface 6 is specifically composed of a piece which is completely isolated and separate from the superstructure during the processing of its surfaces 7 and 8, in order to simplify this operation and allow it to be particularly precise and accurate also with inexpensive standard equipment and machines. Once the interface 6 has been thus prepared, the anatomical part 2 of the superstructure 5 can then be constructed by stratification of material 11 over the same interface, the latter kept in position on a plate 12 by means of a suitable consolidation device 13 of the layers (for example, a polymerizer or laser device).

Modifications can obviously be applied to the invention as described above, in order to create variants which, however, fall within the scope of the following claims. The interface 3, for example, which is outside the implant in the section of figure 2, can be included inside the implant 4.

## Claims

1. A process for producing a superstructure for dental prostheses obtained with a stratification method, **characterized in that** it comprises the previous preparation of a preformed interface (6) and subsequent construction, by the stratification of a material (11) on the same interface (6), of the anatomical part (2) of said superstructure (5).

2. The process according to claim 1, **characterized in that** it comprises the deposition and consolidation of layers of said material (11) over said interface (6) supported by a plate (12).

3. The process according to claim 2, **characterized in that** said consolidation is effected by means of a consolidation device (13) of said layers of material (11) according to the anatomical conformation of said anatomical part (2) of the superstructure (5).

4. A superstructure for dental prostheses, **characterized in that** it is produced by means of the process according to one or more of the previous claims.

5. The superstructure according to claim 4, **characterized in that** it comprises a stratified portion which corresponds to said anatomical part (2) of the superstructure (5) and a portion which corresponds to the interface (6) of the same superstructure (5).

6. A dental prosthesis, **characterized in that** it comprises the superstructure according to any of the previous claims.
